**Europäisches Patentamt**

**European Patent Office**

**Office européen des brevets**

(19)

(11) Veröffentlichungsnummer : **0 108 857 B2**

(12) # NEUE EUROPÄISCHE PATENTSCHRIFT

(45) Veröffentlichungstag der neuen Patentschrift :
**19.11.92 Patentblatt 92/47**

(51) Int. Cl.⁵ : **B23B 31/00**

(21) Anmeldenummer : **83102348.6**

(22) Anmeldetag : **10.03.83**

(54) **Kraftbetätigtes Spannfutter.**

(30) Priorität : **10.11.82 DE 3241556**

(43) Veröffentlichungstag der Anmeldung :
**23.05.84 Patentblatt 84/21**

(45) Bekanntmachung des Hinweises auf die
Patenterteilung :
**28.10.87 Patentblatt 87/44**

(45) Bekanntmachung des Hinweises auf die
Entscheidung über den Einspruch :
**19.11.92 Patentblatt 92/47**

(84) Benannte Vertragsstaaten :
**AT CH DE FR GB IT LI SE**

(56) Entgegenhaltungen :
**DE-A- 2 711 904**

(56) Entgegenhaltungen :
**DE-A- 2 846 337**
**DE-A- 3 023 413**
**US-A- 4 254 676**
**"Tischvorlage", VDW/VDI-Sitzung des Dreh-**
**futter-Ausschusses am 24. Oktober 1975 im**
**Institut für Werkzeugmaschinen der TUBerlin,**
**Seiten 11 - 14 und Bilder 19 bis 21; Abschnitt**
**24; "Fliehkraft"**

(73) Patentinhaber : **Röhm, Günter Horst**
**Heinrich-Röhm-Strasse 50**
**W-7927 Sontheim (DE)**

(72) Erfinder : **Röhm, Günter Horst**
**Heinrich-Röhm-Strasse 50**
**W-7927 Sontheim (DE)**

(74) Vertreter : **Fay, Hermann, Dipl.-Phys. Dr.**
**Ensingerstrasse 21 Postfach 1767**
**W-7900 Ulm (Donau) (DE)**

EP 0 108 857 B2

**Beschreibung**

Die Erfindung betrifft ein kraftbetätigtes Spannfutter mit radial im Futterkörper verschiebbar geführten Spannbacken aus jeweils einem durch ein im Futterkörper angeordnetes Antriebsglied verstellbaren Spannbackenkörper und einem daran auswechselbar angeordneten, die Spannfläche bildenden Spannbackenteil, ferner mit mindestens einem im Spannfutter angeordneten, vom Spannbackenteil mindestens einer der Spannbakken beaufschlagten Messaufnehmer für die Spannkraft sowie mit einer Übertragungseinrichtung mit einem Geberteil am Spannfutter und einem gegenüber dem Spannfutter stationären Empfängerteil, wobei das Geberteil die Messwerte des bzw. der Messaufnehmer, gegebenenfalls in aufbereiteter Form an das Empfängerteil und dieses eine zum Betrieb des Geberteils etwa benötigte Hilfsenergie an letzteres jeweils berührungslos überträgt.

Derartige Spannfutter dienen dazu, durch fortwährende Messung und Überwachung der Spannkraft die für einen bestimmten Bearbeitungsvorgang des Werkstücks erforderliche Spannkraft genau einzustellen und diese Spannkraft auch bei betriebsmässig sich ändernden Futterdrehzahlen, die sich ändernde, der Spannkraft entgegenwirkende Fliehkraft zur Folge haben, konstant zu halten oder in einer vorgeschriebenen Weise während des Arbeitsablaufs zu ändern.

Bei einem aus US-A-4 254 676 bekannten Spannfutter dieser Art ist das auswechselbare Spannbackenteil gegen den Spannbackenkörper in einem Vorsprung abgestützt, der die Spannkraft zwischen dem Spannbackenteil und dem Spannbackenkörper im wesentlichen radial so überträgt, dass aus der durch Dehnungsmessstreifen zu erfassenden Deformation einer Aussparung im Spannbackenkörper auf die Grösse der Spannkraft geschlossen werden kann. Durch diese Aussparung wird aber der Spannbackenkörper in dem durch die Spannkraft gerade besonders beanspruchten Bereich sehr geschwächt. Ausserdem entstehen durch den Vorsprung in diesem Bereich hohe Kraftdichten, was alles die Steifigkeit der Kraftübertragung (d. h. Kraftübertragung bei möglichst geringen Werkstoffdeformationen) sehr beeinträchtigt.

Bei einem aus dem Dokument "Tischvorlage", VDW/VDI Sitzung des Drehfutter-Ausschusses am 24.10.1975 bekannten Spannfutter sind der Spannbackenkörper und das die Spannfläche bildende Spannbackenteil durch Schrauben verbunden, von welchen eine zur Befestigung von Meßaufnehmern aus einem im mittleren Teil als Verformungskörper ausgebildeten Gewindestift besteht, der mit Hilfe eines aufschraubbaren Befestigungskopfes axial am Spannbackenteil abgestützt ist. Unter der Wirkung der Spannkraft wird der Verformungsklörper auf Zug und reine Biegung beansprucht, wobei im Vergleich zur reinen Biegung der aus der reinen Zugbelastung herrührende Dehnungsanteil des Verformungskörpers überwiegt.

Aus DE-A-27 11 904 ist ein Spannfutter bekannt, bei dem der Spannbackenkörper und das die Spannfläche bildende Spannbackenteil auskuppelbar und kraftschlüssig durch einen Verzahnungsbolzen axial miteinander verbunden sind.

Der Erfindung liegt die Aufgabe zugrunde, ein Spannfutter der eingangs genannten Art so auszubilden, dass die Anordnung des Messaufnehmers an oder in dem Spannbackenkörper oder dem Spannbackenteil vermieden und die Kraftübertragung über den Spannbackenkörper und das Spannbackenteil durch die Anordnung des Messaufnehmers nicht beeinträchtigt wird.

Diese Aufgabe wird nach der Erfindung dadurch gelöst, dass bei einem den Spannbackenkörper und das Spannbackenteil auskuppelbar und kraftschlüssig axial miteinander verbindenden Verzahnungsbolzen dieser Verzahnungsbolzen den Messaufnehmer betätigt, der in einer Ausnehmung eines den Verzahnungsbolzen in axialer Richtung verstellenden Stellrings angeordnet ist und dem Verzahnungsbolzen stirnseitig anliegt, so dass der hierbei vorteilhafterweise als Kraftaufnehmer ausgebildete Messaufnehmer direkt die in axialer Richtung des Verzahnungsbolzens wirkende Kraft, die ein Mass für die Spannkraft ist, erfasst, selbst aber an der Spanubewegung der Spannbadeen wicht teilmimmt.

Im folgenden wird die Erfindung an in der Zeichnung dargestellten Ausführungsbeispielen näher erläutert; es zeigen:

Fig. 1 einen Axialschnitt durch ein Spannfutter nach der Erfindung,

Fig. 2 einen Schnitt durch eine Spannbacke des Spannfutters nach Fig. 1.

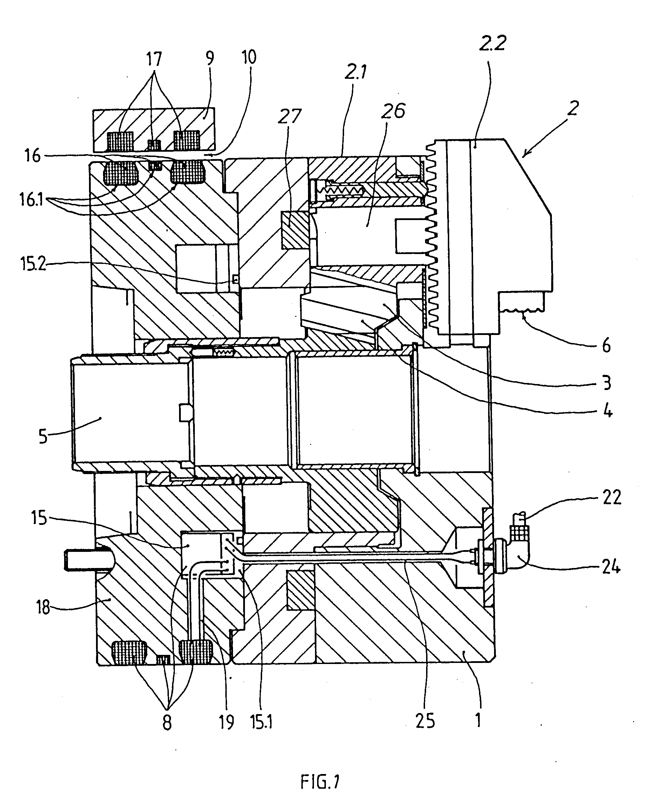

In der Zeichnung ist der Futterkörper des Spannfutters allgemein mit 1, die darin radial verstellbar geführten Spannbacken sind allgemein mit 2 bezeichnet. In Fig. 1 ist nur eine von in der Regel insgesamt drei Spannbacken erkennbar. Die Spannbacken 2 stehen zu ihrer radialen Verstellung über Keilhaken 3, 4 mit einem Antriebsglied 5 in kraft- und formschlüssigem Eingriff, so dass eine axiale Verstellung des Antriebsglieds 5 eine radiale Verstellung der Spannbacken 2 bewirkt. Das Antriebsglied 5 kann in an sich bekannter und daher hier nicht näher zu beschreibender Weise durch einen Spannzylinder betätigt werden, dessen Spannkolben durch die hohle Drehmaschinenspindel hindurch über eine Zugstange oder ein Zugrohr mit dem Antriebsglied 5 verbunden sein kann. In den Ausführungsbeispielen erfolgt die Kraftübertragung zwar über Keilhaken 3, 4, jedoch kann der Antrieb der Spannbacken 2 auch in jeder anderen hierfür bekannten Weise erfolgen.

Im Spannfutter 1 ist ein von mindestens einer der Spannbacken 2 beaufschlagter Messaufnehmer 7 für die Spannkraft dieser Spannbacke 2 vorgesehen. Ferner ist eine Übertragungseinrichtung vorgesehen, die aus einem am Spannfutter angeordneten Geberteil 8 und einem gegenüber dem Spannfutter stationären Empfängerteil 9 besteht. Die Übertragung der Messwerte vom Geberteil 8 an das Empfängerteil 9 und einer zum Betrieb des Geberteils 8 etwa benötigten Hilfsenergie vom Empfängerteil 9 an das Geberteil 8 erfolgt dabei jeweils berührungslos, in den Ausführungsbeispielen über den Spalt 10. Das Geberteil 8 ist im Spannfutterkörper angeordnet und besteht aus einer oder mehreren elektronischen Baugruppen 15 für die Messwertaufnahme und -übergabe, wobei jedem Messaufnehmer 7 eine eigene Baugruppe 15 zugeordnet ist. Ferner umfasst das Geberteil 8 mehrere, zur Futterachse koaxiale Rotorspulen 16, die zur Übertragung der Messwerte und der Hilfsenergie mit zugeordneten, nur schematisch angedeuteten Statorspulen 17 des Empfängerteils 9 in induktiver Wechselwirkung stehen. Die Rotorspulen 16 sind in jeweils einer Ringnut 16.1 des Futterkörpers angeordnet, wobei die Ringnuten 16.1 entlang der Mantelfläche des Futterkörpers verlaufen, wobei in den Ausführungsbeispielen die Rotorspulen 16 und die elektronischen Baugruppen 15 in einem Futteranschlussflansch 18 angeordnet sind, mit welchem ein bereits vorhandenes Kraftspannfutter 1 zur Messung der Spannkraft nachgerüstet werden kann. Die elektronischen Baugruppen 15 sitzen in entsprechenden Ausnehmungen 15.1 des Futterkörpers bzw. des Futteranschlussflansches 18, bei letzterem können die Ausnehmungen 15.1 auch unmittelbar von einer Stirnflächenringnut gebildet sein. In jedem Fall stehen die Ausnehmungen 15.1 über einen ringnutartigen Verbindungskanal 15.2 zum gegenseitigen elektrischen Anschluss miteinander in Verbindung. Schliesslich ist mindestens ein Verbindungskanal 19 zwischen jeder Ringnut 16.1 und jeweils einer der Ausnehmungen 15.1 vorgesehen, um den elektrischen Anschluss der Rotorspulen 16 an die Baugruppen 15 zu ermöglichen.

Die Übertragung des Messwertes von dem Messaufnehmer 7 zum Geberteil kann über eine flexible Verbindungsleitung 22 erfolgen, die an einem bzw. an beiden Enden mit einer Steckverbindung 24 versehen sein kann. Durch einen sich in axialer Richtung des Futters 1 erstreckenden, in eine der Ausnehmungen 15.1 mündenden Anschlusskanal 25 ist die an der Futterstirnseite angeordnete Steckverbindung 24 an die elektronische Baugruppe 15 angeschlossen.

Die Spannbacken 2 sind geteilt in einen durch das Antriebsglied 5 verstellbaren Spannbackenkörper 2.1 und ein daran auswechselbar angeschlossenes, die Spannfläche 6 bildendes Spannbackenteil 2.2. Beide sind durch einen Verzahnungsbolzen 26 miteinander gekuppelt, der axial verschiebbar im Spannbackenkörper 2.1 geführt und durch einen im Futterkörper gelagerten Stellring 27 verstellbar ist.

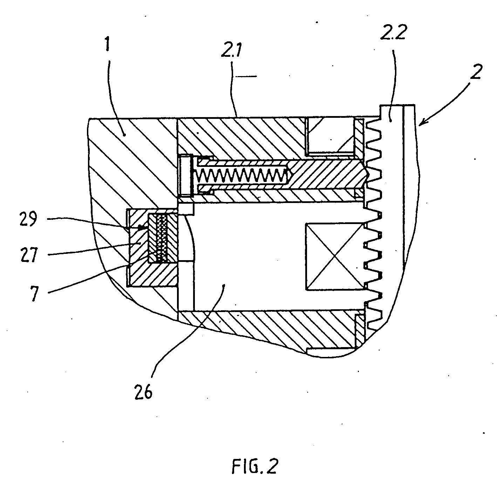

Der Messaufnehmer 7 wird von dem Verzahnungsbolzen 26, der die beiden Spannbackenteile auskuppelbar und kraftschlüssig miteinander verbindet, betätigt. In dem Ausführungsbeispiel der Fig. 2 ist in dem den Verzahnungsbolzen 26 in axialer Richtung verstellenden Stellring 27 eine Ausnehmung 29 vorgesehen, in welcher der Messaufnehmer 7 angeordnet ist und dem Verzahnungsbolzen 26 stirnseitig anliegt. Die Betätigung des Messaufnehmers 7 durch den Verzahnungsbolzen 26 empfiehlt sich allgemein immer dann, wenn eine Lagerung des Messaufnehmers in der Spannbacke selbst aus konstruktiven oder anderen Gründen nicht möglich ist.

**Patentansprüche**

1. Kraftbetätigtes Spannfutter mit radial im Futterkörper verschiebbar geführten Spannbacken (2) aus jeweils einem durch ein im Futterkörper (1) angeordnetes Antriebsglied (5) verstellbaren Spannbackenkörper (2.1 ) und einem daran auswechselbar angeordneter, die Spannfläche (6) bildenden Spannbackenteil (2.2), ferner mit mindestens einem im Spannfutter (1) angeordneten, vom Spannbackenteil (2.2) mindestens einer der Spannbacken (2) beaufschlagten Messaufnehmer (7) für die Spannkraft sowie mit einer Übertragungseinrichtung mit einem Geberteil (8) am Spannfutter (1) und einem gegenüber dem Spannlutter (1) stationären Empfängerteil (9), wobei das Geberteil (8) die Messwerte des bzw. der Messaufnehmer (7), gegebenenfalls in aufbereiteter Form an das Empfängerteil (9) und dieses eine zum Betrieb des Geberteils (8) etwa benötigte Hilfsenergie an letzteres jeweils berührungslos überträgt, dadurch gekennzeichnet, dass bei einem den Spannbackenkörper (2.1) und das Spannbackenteil (2.2) auskuppelbar und kraftschlüssig axial miteinander verbindenden Verzahnungsbolzen (26) dieser Verzahnungsbolzen (26) den Messaufnehmer (7) betätigt, in einer Ausnehmung (29) eines der Verzahnungsbolzen (26) in axialer Richtung verstellenden Stellrings (27) angeordnet ist und dem Verzahnungsbolzen (26) stirnseitig anliegt.

**Claims**

1. Power-actuated chuck comprising clamping jaws (2) which are radially displaceably guided in the chuck body, each comprising a clamping jaw body (2.1) displaceable by a drive member (5) arranged in the chuck body (1), and a clamping jaw portion (2.2) which is arranged replaceably on the clamping jaw body (2.1) and which forms the clamping surface (6), further comprising at least

one measurement pick-up (7) for the clamping force, which is arranged in the chuck (1) and which can be acted upon by the clamping jaw portion (2.2) of at least one of the clamping jaws (2), and a transmission means having a sender member (8) on the chuck (1) and a receiving member (9) which is stationary with respect to the chuck (1), wherein the sender member (8) transmits the measurement values of the measuring pick-up or pick-ups (7), possibly in processed form, to the receiving member (9) and the receiver member (9) transmits to the sender member (8) auxiliary power that is possibly required to operate the sender member (8),in each case in a contact-less mode, characterised in that, with a toothed pin (26) which disengageably and force-lockingly axially interconnects the clamping jaw body (2.1) and the clamping jaw portion (2.2), said toothed pin (26) actuates the measuring pick-up (7), which is arranged in a recess (29) in a setting ring (27) for setting the toothed pin (26) in the axial direction, and bears against the toothed pin (26) at the end thereof.

**Revendications**

1. Mandrin de serrage actionné par une force et comportant des mâchoires de serrage (2) qui sont guidées de manière à être déplaçables radialement dans le corps du mandrin et sont constituées chacune par un corps (2.1), qui est déplaçable au moyen d'un organe d'entraînement (5) monté dans le corps (1) du mandrin, et par un élément de mâchoire (2.2), qui est monté de façon interchangeable sur le corps de mâchoire et délimite la surface de serrage (6), et comportant en outre au moins un capteur de mesure (7) disposé dans le mandrin de serrage (1) et chargé par l'élément de mâchoire (2.2) d'au moins l'une des mâchoires de serrage (2) et servant à mesurer la force de serrage, ainsi qu'un dispositif de transmission comportant une partie formant émetteur (8) montée sur le mandrin de serrage (1) et une partie formant récepteur (9) qui est fixe par rapport au mandrin de serrage (1), auquel cas la partie formant émetteur (8) transmet, sans contact, les valeurs de mesure du ou des capteurs de mesure (7), éventuellement sous une forme préparée, à la partie formant récepteur (9) et cette dernière transmet, sans contact, une énergie auxiliaire, par exemple nécessaire pour faire fonctionner la partie formant émetteur (8), à cette partie formant émetteur, caractérisé en ce que dans le cas où il est prévu un tenon d'engrènement (26) reliant axialement entre eux, selon une liaison par formes complémentaires et avec possibilité de désaccouplement, le corps (2.1) de la mâchoire de serrage et l'élément de mâchoire (2.2), ce tenon d'engrènement (26) actionne le capteur de mesure (7), qui est disposé dans un évidement (29) d'une bague de réglage (27) réglant le tenon d'engrènement(26) dans la direction axiale et s'applique frontalement contre le tenon d'engrènement (26).

FIG.1

FIG.2